# FASCICULE DE BREVET EUROPEEN

(11) **EP 1 087 718 B1**
(45) Date de publication et mention de la délivrance du brevet: **24.06.2009**
(21) Numéro de dépôt: 00917132.3
(22) Date de dépôt: 06.04.2000
(51) Int. Cl.: A61C 8/00, A61C 9/00

(54) **DISPOSITIF PORTE-EMPREINTE A SEGMENTS AMOVIBLES POUR TRANSFERT D'IMPLANT DENTAIRE**
ABDRUCKLÖFFEL MIT ABNEHMBAREN ABSCHNITTEN ZUR ÜBERTRAGUNG VON ZAHNIMPLANTATEN
IMPRESSION TRAY DEVICE WITH REMOVABLE SEGMENTS FOR DENTAL IMPLANT TRANSFERS

(30) Priorité: 16.04.1999 FR 9904775
(43) Date de publication de la demande: 04.04.2001
(73) Titulaire: Guillaume, Bernard, 78600 Maisons Lafitte (FR); Mazeirat, Jean, 75116 Paris (FR)
(72) Inventeur: Guillaume, Bernard, 78600 Maisons Lafitte (FR); Mazeirat, Jean, 75116 Paris (FR)
(74) Mandataire: Le Forestier, Eric
(86) Numéro de dépôt international: PCT/FR2000/000862
(87) Numéro de publication internationale: WO 2000/062703

(56) Documents cités:
- BE-A- 568 941
- BE-A- 569 435
- US-A- 4 708 654

## Description

Dispositif porte-empreinte à segments amovibles pour transfert d'implant dentaire.

Le transfert d'implant est une pièce solidarisée à l'implant situé sur l'arcade dentaire grâce à une vis engagée et serrée dans le filetage interne de l'implant.

Les porte-empreinte classiques perforés ou non qui servent en prothèse conjointe ou adjointe ne sont pas adaptés à la prise d'empreintes des transferts car ils ne possèdent pas d'ouverture permettant d'accéder à la vis du transfert afin de le désolidariser de l'implant, permettant ainsi le retrait de l'empreinte.

Le document US 53347 divulgue un porte empreinte comportant une succession de segments amovibles sur sa face occlusale.

Le dispositif selon l'invention est énoncé à la revendication 1. Des modes de réalisation sont énoncés dlans les autres revendications.

L'invention et sa mise en oeuvre apparaîtront plus clairement à l'aide de la description qui va suivre, faite en référence aux dessins annexés illustrant uniquement à titre d'exemple quelques modes de réalisation: dans ces dessins, les mêmes pièces seront reperées par les mêmes nombres.

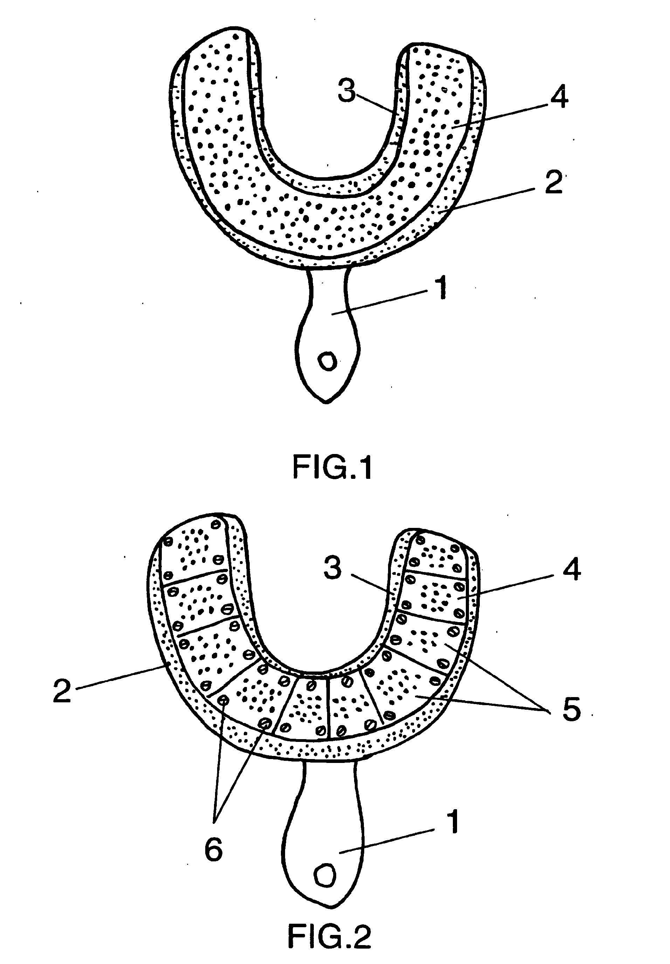

La figure 1 montre que le porte-empreinte (1) est une gouttière semi-élliptique qui présente une face externe ou vestibulaire (2), une face interne linguale ou palatine (3), et une face occlusale (4), correspondant à la surface triturante des dents: Ce porte empreinte rempli de matériau à empreinte mou est placé sur l'arcade dentaire jusqu'à durcissement de ce dernier.
La figure 2 montre un exemple de porte-empreinte (1) présentant sur sa face occlusale (4) une succession de segments amovibles (5), solidarisés au porte-empreinte (1), dans ce mode de réalisation par des vis (6). Un ou plusieurs de ces segments amovibles (5) peuvent être retirés en fonction des besoins par dévissage des vis (6).

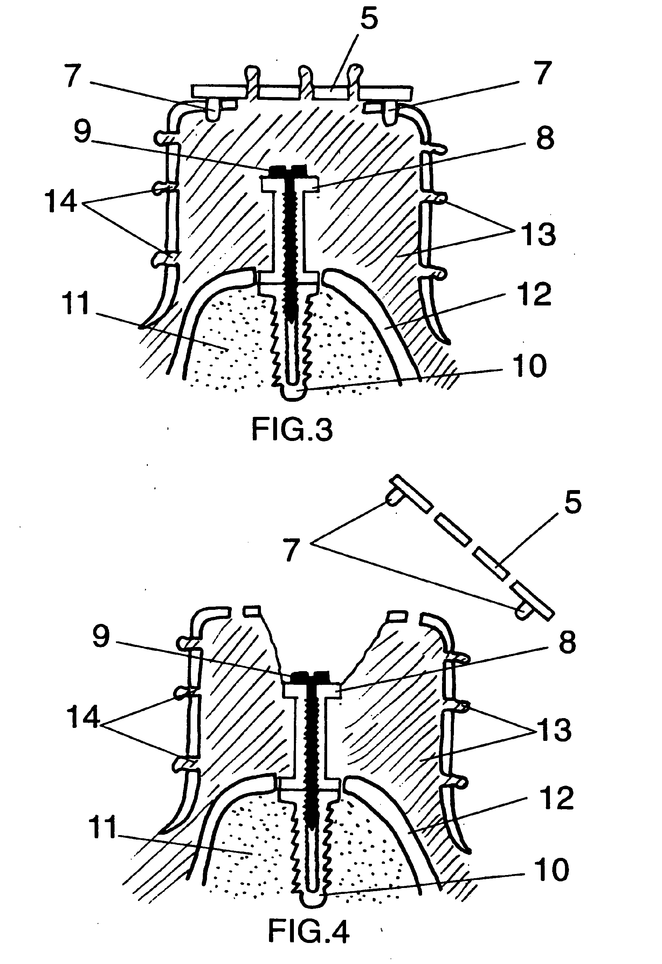

La figure 3 est une vue en coupe transversale du dispositif objet de l'invention: Dans ce mode de réalisation, les segments amovibles (5), sont solidarisés au porte-empreinte (1) par des ergots (7). La coupe passe dans l'axe des ergots (7), dans l'axe du transfert (8), dans l'axe de la vis (9) qui solidarise le transfert (8) à l'implant (10), et enfin dans l'axe de l'implant (10) situé dans l'os (11), lequel est recouvert de gencive (12).
   L'ensemble porte-empreinte (1) et le transfert (8), sont solidarisés par du matériau à empreinte (13), qui fuse au travers des perforations (14) dans le porte-empreinte (1), afin d'assurer la rétention du matériau (13) avec ce dernier.
La figure (4) montre comment après durcissement du matériau à empreinte (13), une fois le segment amovible (5) ôté, après avoir enlevé un peu de matériau à empreinte (13), on accède à la vis (9).

## Revendications

1. Dispositif porte-empreinte (1), pour transfert (8) d'un implant dentaire (10), comportant sur sa face occlusale (4) une succession de segments amovibles (5), **caractérisé en ce que** les segments présentent à la fois des perforations (14) dans lesquelles le matériau à empreinte est susceptible de pénétrer, et des ergots (7) solidarisant les segments amovibles au porte-empreinte et susceptibles de pénétrer dans le matériau à empreinte, de manière à assurer la stabilisation du matériau à empreinte (13).

2. Dispositif selon la revendication 1, **caractérisé en ce qu'**il comprend des vis (6) solidarisant les segments amovibles au porte-empreinte.

3. Dispositif selon l'une des revendications 1 et 2, **caractérisé en ce qu'**il comprend une gouttière présentant des perforations (14) permettant d'assurer également la rétention du matériau d'empreinte.

## Claims

1. An impression tray device (1), for transferring (8) a dental implant (10), including on its occlusal face (4) a succession of removable segments (5), **characterized in that** the segments have both perforations (14) in which the impression material is capable of penetrating, and lugs (7) firmly attaching the removable segments to the impression tray and capable of penetrating into the impression material, so as to provide stabilization of the imprint material (13).

2. The device according to claim 1, **characterized in that** it comprises screws (6) firmly attaching the removable segments to the impression tray.

3. The device according to any of claims 1 and 2, **characterized in that** it comprises a gutter having perforations (14) also allowing the impression material to be retained.

## Patentansprüche

1. Abdrucklöffelvorrichtung (1) zur Übertragung (8) eines Zahnimplantats (10), der auf seiner okklusalen Seite (4) eine Abfolge von abnehmbaren Abschnitten (5) aufweist, **dadurch gekennzeichnet, dass** die Abschnitte zugleich Perforationen (14), in die das Abdruckmaterial eindringen kann, und Zapfen (7) aufweist, die die abnehmbaren Abschnitte an dem Abdrucklöffel befestigen und in das Abdruckmaterial eindringen können, so dass die Stabilisierung des Abdruckmaterials (13) sichergestellt ist.

2. Abdrucklöffel nach Anspruch 1, **dadurch gekennzeichnet, dass** er Schrauben (6) zum Befestigen der abnehmbaren Abschnitte am Abdrucklöffel aufweist.

3. Abdrucklöffel nach einem der Ansprüche 1 und 2, **gekennzeichnet durch** eine Rinne mit Perforationen (14), die auch das Sicherstellen des Zurückhaltens des Abdruckmaterials erlauben.
